# EUROPEAN PATENT SPECIFICATION

(11) **EP 3 471 512 B1**
(45) Date of publication and mention of the grant of the patent: **05.06.2024**
(21) Application number: 17847872.3
(22) Date of filing: 05.01.2017
(51) Int. Cl.: H04N 5/63, H02M 1/42, H02M 3/335, H05B 45/10

(54) **SWITCHING POWER SUPPLY AND TELEVISION**
SCHALTNETZTEIL UND FERNSEHER
ALIMENTATION ÉLECTRIQUE À DÉCOUPAGE ET TÉLÉVISEUR

(30) Priority: 09.09.2016 CN 201610814008
(43) Date of publication of application: 17.04.2019
(73) Proprietor: Shenzhen Skyworth-RGB Electronic Co., Ltd., Shenzhen, Guangdong 518057 (CN)
(72) Inventor: CHEN, Jianzhong, Shenzhen, Guangdong 518057 (CN); YANG, Jitao, Shenzhen, Guangdong 518057 (CN)
(74) Representative: Osterhoff, Utz
(86) International application number: PCT/CN2017/070308
(87) International publication number: WO 2018/045696

(56) References cited:
- CN-A- 102 523 406
- CN-A- 104 377 971
- CN-A- 104 935 843
- CN-A- 105 813 263
- CN-A- 105 813 263
- CN-A- 105 934 017
- CN-U- 203 279 282
- CN-U- 205 040 065
- US-A1- 2006 061 930
- US-A1- 2012 025 735
- US-B1- 6 441 590

## Description

### TECHNICAL FIELD

The present disclosure relates to the field of power supply technology, and in particular, to a switching power supply and a television having the switching power supply.

### BACKGROUND

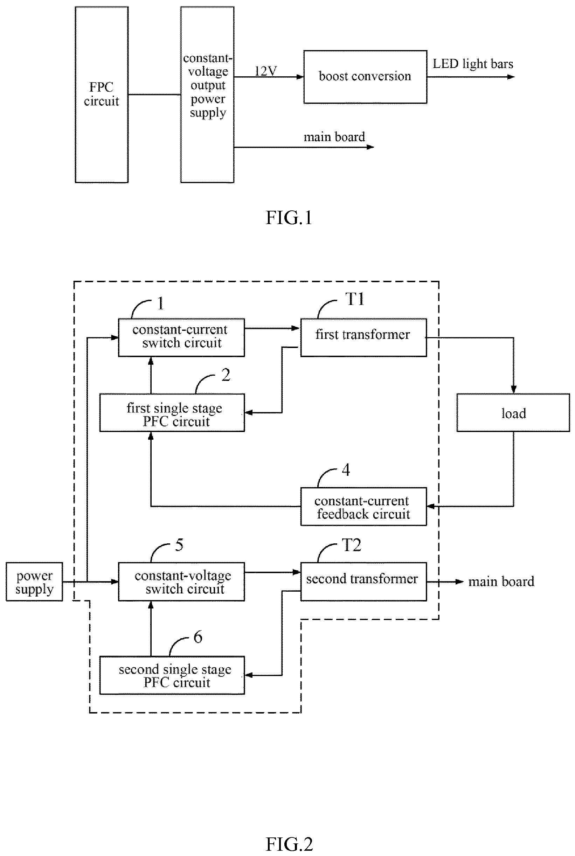

When power demand of a load is higher than 75W, a power factor needs to be higher than 0.9 due to the national standards. A traditional television power supply architecture is shown in FIG. 1, the power supply needs to be performed a power factor correction (PFC) first, and then carried out DC-DC conversion, then a 24V output by the constant-voltage output power supply needs to be boosted of voltage to supply power to backlight light bars, which would result in a low power conversion efficiency, and increased costs of constant-current board and PFC circuit. Meanwhile, the power supply architecture outputs constant-current and constant-voltage alternately, which is prone to be interfered when dynamic load being applied to the constant-voltage and the constant-current.

Patent No. CN102523406A discloses a power circuit structure and an LED liquid crystal television adopting the power circuit structure. The power circuit structure includes a rectifying circuit, a PFC (Power Factor Correction) backlight drive circuit, a PF (Power Factor) value correction inductor and a flyback circuit, where the rectifying circuit is used for receiving alternating-current input, rectifying the alternating-current input and then outputting a first direct-current voltage; the PFC backlight drive circuit is electrically connected with the rectifying circuit so as to receive the first direct-current voltage and is used for carrying out PF correction on the first direct-current voltage so as to output a second direct-current voltage to supply power to a backlight source and carrying out constant-current control on the backlight source; the PF value correction inductor is electrically connected with the rectifying circuit to receive the first direct-current voltage and output a third direct-current voltage; and the flyback circuit is electrically connected with the PF value correction inductor to receive the third direct-current voltage and output a fourth direct-current voltage so as to supply power to a load the power of which is lower than that of the backlight source. Therefore, according to the power circuit structure and the LED liquid crystal television, the purposes of reducing system cost and improving system efficiency and reliability are achieved at the same time as PF value and harmonic wave factor are ensured.

Patent No. CN105813263A discloses a switching power supply and a television. The switching power supply includes a rectifier circuit, a transformer, a constant-voltage control circuit, a power management circuit and a constant-current control circuit, where an output end of the rectifier circuit is connected with a power detection terminal of the power management circuit and a power input end of the transformer; a controlled terminal of the transformer is connected with a control terminal of the power management circuit; a constant-voltage output winding of the transformer is connected with a feedback input end of the power management circuit through the constant-voltage control circuit; and a constant-current output winding of the transformer is connected with the constant-current control circuit through an LED load. The switching power supply has the characteristic of low cost.

### SUMMARY

It is therefore one primary object of the present disclosure to provide a switching power supply, intending to improve the power conversion efficiency, increase the stability of outputting constant-voltage and constant-current, and reduce the cost of power supply.

To achieve the above object, the present disclosure provides a switching power supply according to claim 1.

The first transformer comprises a primary winding, a secondary winding and an auxiliary winding disposed at a primary side of the first transformer; an input terminal of the constant-current circuit is adapted to receive a direct current, an output terminal of the constant-current switch circuit is coupled to the primary winding of the first transformer; the auxiliary winding of the first transformer is coupled to a zero current detection terminal of the first single stage PFC circuit; an output terminal of the constant-current switch is coupled to an input terminal of the constant-current control circuit; an output terminal of the constant-current control circuit is coupled to an input terminal of the constant feedback circuit, an output terminal of the constant-current feedback circuit is coupled to a feedback terminal of the first single stage PFC circuit.

Preferably, the switching power supply further includes a DC-DC conversion circuit, an input terminal of the DC-DC conversion circuit is coupled to the secondary winding of the second transformer.

Preferably, the constant-current control circuit includes a starting circuit, a constant-current reference source circuit, and a plurality of mirror constant-current circuits; an output terminal of the starting circuit is coupled to a controlled terminal of the constant-current reference source circuit, all controlled terminals of the mirror constant-current circuits is coupled to an output terminal of the constant-current reference source circuit.

Preferably, the starting circuit includes an eleventh resistor, a twelfth resistor, a thirteenth resistor, a fourth triode, a fifth triode;
a first terminal of the eleventh resistor is coupled to a direct current power supply, a second terminal of the eleventh resistor is coupled to an emitter of the fourth triode, a collector of the fourth triode is coupled to the controlled terminal of the constant-current reference source circuit, a base of the fourth triode is coupled to a collector of the fifth triode via the twelfth resistor, an emitter of the fifth triode is grounded.

Preferably, the constant-current reference source circuit includes a fourteenth resistor a second voltage reference chip, a sixth triode; an input terminal of the second voltage reference chip is coupled to a collector of the fourth triode, an output terminal of the second voltage reference chip is grounded; a reference terminal of the second voltage reference chip is coupled to controlled terminals of the mirror constant-current circuits, and the reference terminal of the second voltage reference chip also coupled to a base of the sixth triode, the base of the sixth triode also coupled to the collector of the fourth triode, an emitter of the sixth triode is grounded via the fourteenth transistor.

The mirror constant-current circuit includes a fifteenth resistor, a seventh triode; an emitter of the seventh triode is grounded via the fifteenth resistor.

Preferably, the switching power supply further includes over-voltage regulation circuits; the constant-current switch is one of constant-current switches; an input terminal of each of the over-voltage regulation circuits is coupled to an output terminal of each of the constant-current switches, output terminals of all the over-voltage regulation circuits are coupled to a regulation terminal of the constant-current feedback circuit.

Preferably, the first transformer comprises a primary winding, a secondary winding, and an auxiliary winding disposed at a primary side of the first transformer; an input terminal of the constant-current circuit is adapted to receive a direct current, an output terminal of the constant-current switch circuit is coupled to the primary winding of the first transformer; the auxiliary winding of the first transformer is coupled to a zero current detection terminal of the first single stage PFC circuit; an output terminal of the constant-current switch is coupled to an input terminal of the constant-current control circuit; an output terminal of the constant-current control circuit is coupled to an input terminal of the constant feedback circuit, an output terminal of the constant-current feedback circuit is coupled to a feedback terminal of the first single stage PFC circuit.

Preferably, the switching power supply further includes a DC-DC conversion circuit, an input terminal of the DC-DC conversion circuit is coupled to the secondary winding of the second transformer.

The solution disclosed by the present disclosure has a switching power supply via disposing the constant-current switch circuit, the first single stage PFC circuit, the first transformer, the constant-current feedback circuit, the constant-voltage switch circuit, the second single stage PFC circuit and the second transformer. The present disclosure adopts the output method of single stage PFC without secondary boost conversion. That is, the first single-stage PFC circuit controls the operation of the first transformer, directly converts the AC-DC, outputs the constant-current source, which eliminates the high-voltage electrolytic capacitor, therefore improves the power factor of the power supply and reduces the system cost; meanwhile, a constant-current output circuit includes the constant-current switch circuit, the first single-stage PFC circuit, the first transformer, and the constant-current feedback circuit, and the constant-voltage output circuit includes the constant-voltage switch circuit, the second single-stage PFC circuit, and the second transformer. Therefore, the constant-voltage source and the constant-current source output by the switching power supply to be controlled respectively, so that the output of the constant-voltage and the constant-current do not interfere with each other during the dynamic load, and the constant-voltage source is not affected by the crossover of the electrical parameter deviation of the LED light itself, therefore improving the stability of the system.

### BRIEF DESCRIPTION OF THE DRAWINGS

To illustrate the technical solutions according to the embodiment of the present disclosure or in the prior art more clearly, the accompanying drawings for describing the embodiment or the prior art are introduced briefly in the following. Apparently, the accompanying drawings in the following description are only about some embodiment of the present disclosure, and persons of ordinary skill in the art can derive other drawings from the accompanying drawings without creative efforts.
FIG. 1 shows a traditional TV power supply architecture;
FIG. 2 shows a function module diagram of a switching power supply according to an embodiment of the present disclosure;
FIG. 3 shows a function module diagram of a switching power supply according to a further embodiment of the present disclosure;
FIG. 4 shows a structure diagram of a switching power supply according to an embodiment of the present disclosure.

Labels illustration for drawings:

**[table 1]**

| Labe l | Name | Label | Name |
|---|---|---|---|
| 1 | constant-current switch circuit | T1 | first transformer |
| 2 | first single stage PFC circuit | T2 | second transformer |
| 3 | constant-current control circuit | R1∼R2 5 | first resistor to twenty-fifth resistor |
| 31 | starting circuit | D1∼D6 | first diode to sixth diode |
| 32 | constant-current reference source circuit | C1∼C7 | first capacitor to seventh capacitor |
| 33 | mirror constant-current circuit | Q1∼Q8 | first transistor to eighth transistor |
| 4 | constant-current feedback circuit | U1 | first control chip |
| 5 | constant-voltage switch circuit | U2 | first optocoupler U2 |
| 6 | second single stage PFC circuit | U3 | second optocoupler |
| 7 | first secondary rectifier and filter circuit | U4 | second control chip |
| 8 | second secondary rectifier and filter circuit | K1 | first MOS transistor |
| 9 | DC-DC conversion circuit | K2 | second MOS transistor |
| 10 | EMI filter circuit | M | constant-current switch |
| 11 | front stage rectifier and filter circuit | M1 | first constant-current switch |
| WZ1 | first voltage reference chip | M2 | second constant-current switch |
| WZ2 | second voltage reference chip | VCC1 | first direct current source |
| Z1 | first stabilivolt | VDD | second direct current source |

The foregoing objects, features and advantages of the present disclosure will be described in further detail with reference to the accompanying drawings.

### DETAILED DESCRIPTION OF THE EMBODIMENTS

The technical solutions of the embodiments of the present disclosure will now be clearly and completely described in such definite and comprehensive detail with reference to the accompanying drawings. It is obvious that the embodiments to be described are only a part rather than all of the embodiments of the present disclosure. All other embodiments obtained by persons skilled in the art based on the embodiments of the present disclosure without creative efforts shall fall within the protection scope of the appended claims.

It is to be understood that, all of the directional instructions in the exemplary embodiments of the present disclosure (such as top, down, left, right, front, back......) can only be used for explaining relative position relations, moving condition of the elements under a special form (referring to figures), and so on, if the special form changes, the directional instructions changes accordingly.

A switching power supply is provided by the present disclosure.

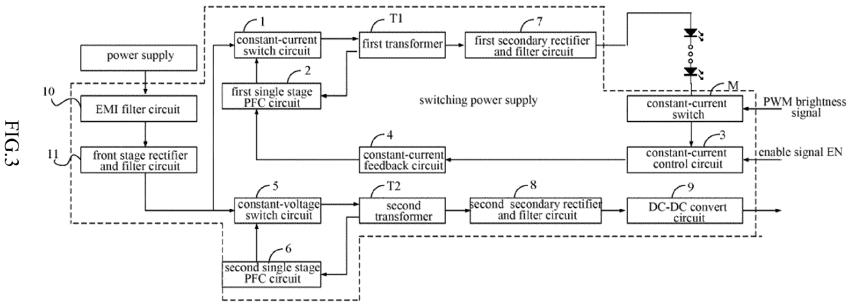

Referring to FIG. 2 and FIG. 3, in the embodiment of the present disclosure, the switching power supply includes a constant-current switch circuit 1, a first single stage PFC circuit 2, a first transformer T1, and a constant-current feedback circuit 4; the switching power supply further including a constant-voltage switch circuit 5, a second single stage PFC circuit 6 and a second transformer T2.

The constant-current feedback circuit 4 samples a current output by the first transformer T1, and feeds back the sampled current to the first single stage PFC circuit 2; the first single stage PFC circuit 2 outputs a switch signal, drives the constant-current switch circuit 1 to be turned on or off, and controls the load current to be constant according to the sampled current.

The constant-current switch circuit 1 converts inputted direct current to pulsating direct current power and outputs to the first transformer T1. The first transformer T1 conducts the voltage conversion of the inputted pulsating direct current power and output to the load.

The second single stage PFC circuit 6 outputs a switch signal and drives the constant-voltage switch circuit 5 to be turned on or off; the second single stage PFC circuit 6 samples a voltage output by the second transformer T2 to obtain the sampled voltage, and regulate a duty ratio of the switch signal according to the sampled voltage, to regulate the voltage output to the main board, to control the voltage of the load to be constant.

The constant-voltage switch circuit 5 converts inputted direct current to pulsating direct current power and outputs to the second transformer T2; the second transformer T2 conducts the voltage conversion of the inputted pulsating direct current power and output to the main board.

In the present embodiment, the switching power supply is applied to the television, in which the first transformer supplies power to the LED light bar inside the television, the second transformer supplies power to the main board inside the television.

It should be noted that in the present embodiment, the switching power supply also includes a EMI filter circuit 10 and a front stage rectifier and filter circuit 11. An alternating current output by an outer power supply be filtered out electromagnetic disturbance by the EMI filter circuit 10, then be inputted to the front stage rectifier and filter circuit, after being rectified and filtered by the front stage rectifier and filter circuit 11 it is output to the first transformer T1.

The first single stage PFC circuit 2 includes a control chip and a corresponding peripheral circuit. In the present embodiment, the control chip adopts the HVLED001A chip of the ST semiconductor, and may automatically control the power switch frequency to enter the working mode of the skip cycle when in standby light load, so as to improve the efficiency of standby light load, eliminate the need for standby transformers and save costs. The constant-current switch M may adopts a MOS transistor, an IGBT, a thyristor or the like, in the present embodiment the MOS transistor is applied.

The solution disclosed by the present disclosure makes a switching power supply by disposing the constant-current switch circuit 1, the first single stage PFC circuit 2, the first transformer T1, the constant-current feedback circuit 4. the present disclosure adopts the output method of single stage PFC without secondary boost conversion. That is, the first single-stage PFC circuit 2 controls the operation of the first transformer T1, directly converts the AC-DC, outputs the constant-current source, which eliminates the high-voltage electrolytic capacitor, therefore improves the power factor of the power supply and reduces the system cost; meanwhile, a constant-current output circuit includes the constant-current switch circuit 1, the first single-stage PFC circuit 2, the first transformer T1, and the constant-current feedback circuit 4, and the constant-voltage output circuit includes the constant-voltage switch circuit 5, the second single-stage PFC circuit 6, and the second transformer T2. Therefore, the constant-voltage source and the constant-current source output by the switching power supply to be controlled respectively, so that the output of the constant-voltage and the constant-current do not interfere with each other during the dynamic load, and the constant-voltage source is not affected by the crossover of the electrical parameter deviation of the LED light itself, therefore improving the stability of the system.

The switching power supply further including a constant-current switch M and a constant-current control circuit 3. The constant-current switch M adjusts the brightness of the LED light bars according to a PWM brightness signal output by the main board. The constant-current control circuit 3 controls the LED light bars to be illuminated or extinguished according to an enable signal output by the main board.

In the present embodiment, the number of the LED light bar is more than one, during the LED light bars are in a working status, the constant-current control circuit controls current flowing through each LED light bar to be the same, so improves the conformance of the light display.

Specifically, the input terminal of the constant-current circuit 1 receives direct current, the output terminal of the constant-current switch circuit 1 is coupled to the output terminal of the first transformer T1; the sample terminal of the first transformer T1 is coupled to the zero current detection terminal of the first single stage PFC circuit 2; the output terminal of the first transformer T1 is coupled to input terminals of the LED light bars, output terminals of the LED light bars coupled to the input terminal of the constant-current switch, the controlled terminal of the constant-current switch M is coupled to the main board, the output terminal of the constant-current switch M is coupled to the input terminal of the constant current control circuit 3; the output terminal of the constant-current control circuit 3 is coupled to the input terminal of the constant feedback circuit 4, the controlled terminal of the constant-current control circuit 3 receives the enable signal inputted by the main board; the output terminal of the constant-current feedback circuit 4 is coupled to the feedback terminal of the first single stage PFC circuit 2.

The input terminal of the constant-voltage switch circuit 5 receives direct current, the output terminal of the constant-voltage circuit 5 is coupled to the input terminal of the second transformer T2, the sampled terminal of the second transformer T2 is coupled to the zero current detection terminal of the second single stage PFC circuit 6; the output terminal of the second transformer T2 is electrically coupled to the main board.

In the present embodiment, the zero current detection terminals of the first single stage PFC circuit 2 and the second single stage PFC circuit 6 also respectively coupled to auxiliary windings of the first transformer T1 and the second transformer T2, to detect the zero-crossing point of the current of the voltage, therefore, the corresponding switch tube is controlled to be turned on or off at the zero crossing point to reduce loss and improve power consumption efficiency.

Further, the first single stage PFC circuit 2 regulates a duty ratio of a switch signal according to a feedback level of the optocoupler U2, so as to regulate the current output to the LED light bar; the second single stage PFC circuit 6 samples a voltage output by the second transformer T2 to obtain the sampled voltage, and regulate a duty ratio of the switch signal according to the sampled voltage, to regulate the voltage output to the main board.

It should be noted that when the voltage of the LED light bar is lower than the voltage output by the first transformer T1, the first single stage PFC circuit 2 is controlled by the constant-current feedback circuit 4, and the operating frequency or duty ratio of the first single stage PFC circuit 2 is regulated, the constant-current switch circuit 1 is further controlled to smaller the voltage output by the flyback transformer, so that the voltage output by the first transformer T1 may matches the operating voltage of the LED light bar, therefore reduce the temperature rise of the constant-current control circuit 3. The problem of large difference in output voltage caused by large voltage deviation of the same screen LED light in mass production is solved.

The first single stage PFC circuit 2 also makes the voltage of the auxiliary winding constant through the auxiliary winding of the first transformer T1, therefore limiting the voltage output by the first transformer T1 within a prescribed range.

The constant-voltage switch circuit 5 further controls the second transformer T2 under the control of current of the second single stage PFC, and after rectifying and filtering outputs a stable constant-voltage source. The constant-voltage feedback loop is a primary side feedback, that is, the voltage of the auxiliary winding is constant through the auxiliary winding of the second transformer T2, so that the voltage output by the second transformer T2 is constant.

Further, the switching power supply further includes a first secondary rectifier and filter circuit 7 and a second secondary rectifier and filter circuit 8; the first secondary rectifier and filter circuit 7 rectifies and filters a pulsating direct current output by the first transformer T1; the second secondary rectifier and filter circuit 8 rectifies and filters a pulsating direct current power output by the second transformer T2.

In order to further improve the efficiency of the switching power supply, when the constant-current feedback circuit 4 detecting the LED light bar is off, that is, the LED light bar is detected not in a working status, the constant-current feedback circuit 4 turns off the first single stage PFC circuit 2, therefore reducing the loss of the first single stage PFC circuit 2.

When the load has a higher requirement for ripple, the DC-DC conversion circuit may be provided at the output of the voltage, to make the output voltage with less ripple within a low frequency range. Therefore the switching power supply further includes the DC-DC conversion circuit 9, an input terminal the DC-DC conversion circuit 9 is coupled to an output terminal of the second secondary rectifier and filter circuit 8, an output terminal of the DC-DC conversion circuit 9 is electrically coupled to the main board.

When the LED light bars driven by the switching power supply are in plurality of groups, it is easy to understand that the switching power supply includes a plurality of constant-current switches M correspondingly, the input terminals and the output terminals of the plurality of constant-current switches M are respectively coupled in series between the output terminals of the light bars and the input terminal of the constant-current control circuit 3, the controlled terminals of the plurality of constant-current switches M receive the PWM brightness signal output by the main board.

The constant-current control circuit 3 includes a starting circuit 31, a constant-current reference source circuit 32, and a plurality of mirror constant-current circuits; the output terminal of the starting circuit 33 is coupled to the main board to receive the enable signal; the output terminal of the starting circuit 31 is coupled to the controlled terminal of the constant-current reference source circuit 32, the input terminal of the constant-current reference source circuit 32 is coupled to the output terminal of one of the LED light bars; all controlled terminals of the mirror constant-current circuits are coupled to the output terminal of the constant-current reference source circuit 32, input terminals of the mirror constant-current circuits are coupled to output terminals of other LED light bars respectively.

It should be noted that the enable signal sent by the main board includes an enable signal and a shutdown signal. When the starting circuit 31 receives the turn-on signal, the starting circuit 31 outputs a high level, the constant-current reference source circuit 32 is turned on, and the constant-current reference source circuit 32 supplies a current reference for each of the mirror constant-current circuits 33 of the subsequent stage, and each mirror constant-current circuits 33 of the subsequent stage replicates the current in the constant-current reference source circuit 32, so as to equal the current of each of the mirror constant-current circuits 33 and the current of the constant-current reference source circuit 32, so that the brightness of each LED bar skip to shift.

Further, the switching power supply further includes an over-voltage regulation circuit (not shown), in which the number of the over-voltage regulation circuits corresponds to the number of LED bars. Each input terminal of the over-voltage regulation circuit is coupled to the corresponding output terminal of the constant-current switch M, all output terminals of the over-voltage regulation circuits coupled to the regulation terminal of the constant-current feedback circuit 4. The over-voltage regulation circuit controls the first single stage PFC circuit 2 through the constant-current feedback circuit 4 when the output voltage of the transformer is detected to be exceed the voltage of the LED light bars, regulates the switching frequency of the first MOS transistor, and reduces the output voltage of the transformer to the LED light bars.

The constant-current method of the present disclosure is controlled by the series constant-current reference source circuit 32, so that the current flowing through the LED bar is constant, and when the ripple is large, the constant-current reference source circuit 32 may automatically regulate the voltage division to reduce the current ripple, when the difference of the voltage difference of the LED light bar is large, the voltage difference of the LED light bar is too large, and the first single-stage PFC circuit 2 of the primary side is controlled by the regulation of the over-voltage, so as to lowering the output voltage and the voltage across the constant-current source is lowered.

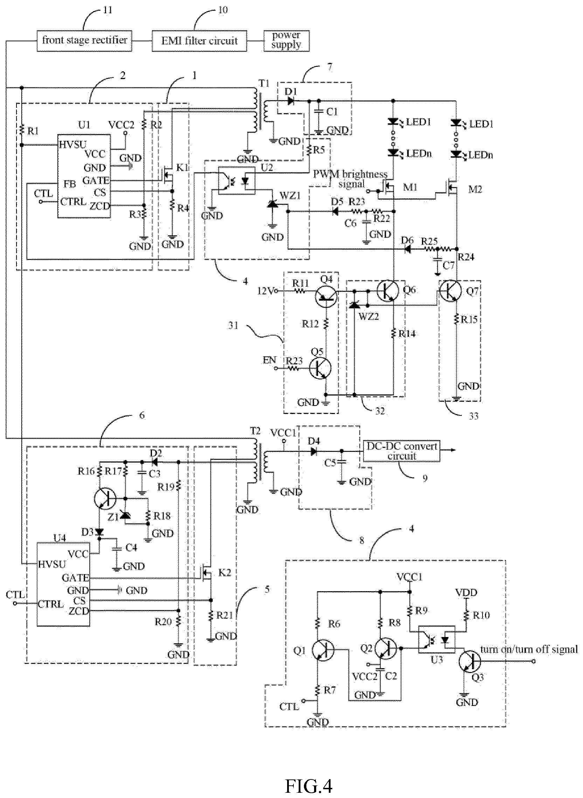

Referring to FIG. 3 and FIG 4, the present disclosure will be further described in conjunction with a specific circuit diagram of the switching power supply:
The first transformer T1 includes a primary winding, a secondary winding and an auxiliary winding, in which the auxiliary winding is disposed at a primary of the transformer;
the first single stage PFC circuit 2 includes a first resistor R1, a second resistor R2, a third resistor R3, and a first control chip U1; the constant-current switch circuit 1 includes a first MOS transistor K1 and a fourth resistor R4; The first control chip U1 includes an over-voltage protection terminal HVSU, a power terminal VCC, a driver terminal GATE, a ground terminal GND, an over-current detection terminal CS, a zero-cross detection terminal ZCD, a feedback terminal FB, and a control terminal CTRL;
a first terminal of the first resistor R1 is coupled to an output terminal of the front stage rectifier and filter circuit 11, a second terminal of the first resistor R1 is coupled to an over-voltage protection terminal of the first control chip U1; a first terminal of the auxiliary winding of the first transformer T1 is coupled to a first terminal of the second resistor R2, a second terminal of the second resistor R2 is coupled to a first terminal of the third resistor R3, a second terminal of the third resistor R3 is grounded, a second terminal of the auxiliary winding of the first transformer T1 is grounded, a zero-cross detection terminal of the first control chip U1 is coupled to a first terminal of the third resistor R3; a first terminal of a primary coil of the first transformer T1 is coupled to an output terminal of the front stage rectifier and filter circuit, a second terminal of the primary coil of the first transformer T1 is coupled to the drain of the first MOS transistor K1, a source of the first MOS transistor K1 is grounded through the fourth resistor R4, a gate of the first MOS transistor K1 is coupled to a driver terminal of the first control chip U1, a zero-cross detection terminal of the first control chip U1 is coupled to the source of the first MOS transistor K1, and a ground terminal of the first MOS terminal is grounded.

The first rectifier and filter circuit 7 includes a first diode D1 and a first capacitor C1; an anode of the first diode D1 is coupled to a first terminal of the secondary winding, and a cathode of the first diode D1 is coupled to a first terminal of the LED bar, the second terminal of the secondary winding is grounded; a first terminal of the first capacitor C1 is coupled to the cathode of the first diode D1, and a second terminal of the first capacitor C1 is grounded.

The constant-current feedback circuit 4 includes a fifth resistor R5, a sixth resistor R6, a seventh resistor R7, an eighth resistor R8, a ninth resistor R9, a tenth resistor R10, a first optocoupler U2, a second optocoupler U3, a first voltage reference chip WZ1, a first transistor Q1, a second transistor Q2, a third transistor Q3, a second capacitor C2, a first direct current source VCC1, and a second direct current source VDD; in the present embodiment the first direct current source VCC1 is supplied by the voltage output by the second transformer T2. It should be noted that the side of the optocoupler provided with the illuminator is the control side. The side with the light receiver is the executive side.

A first terminal of the fifth resistor R5 is coupled to the cathode of the first diode D1, a second terminal of the fifth resistor R5 is coupled to an input terminal in the control side of the first optocoupler U2, an output terminal in the control side of the first optocoupler U2 coupled to the input terminal of the first voltage reference chip WZ1 , an output terminal of the first voltage reference chip WZ1 is grounded, a reference terminal of the first voltage reference chip WZ1 is coupled to an output terminal of the constant-current switch M; an input terminal in the executive side of the first optocoupler U2 is grounded, and an output terminal in the executive side of the first optocoupler U2 is coupled to a feedback terminal of the first control chip U1.

A first terminal of the sixth resistor R6 is coupled to a first direct current source VCC1, a second terminal of the sixth resistor R6 is coupled to a collector of the first transistor Q1, an emitter of the first transistor Q1 is grounded through the seventh resistor, a base of the first transistor Q1 is coupled to a base of the second transistor Q2; a first terminal of the eighth resistor R8 is coupled to the first direct current source VCC1, a second terminal of the eighth resistor R8 is coupled to a collector of the second transistor Q2, an emitter of the second transistor Q2 is grounded via the second capacitor C2; a first terminal of the ninth resistor R9 is coupled to the first direct current source VCC1, a second terminal of the ninth resistor R9 is coupled to an execution input terminal of the second optocoupler U3, an execution output terminal of the second optocoupler U3 is coupled to the base of the second transistor Q2; an input terminal in control side of the second optocoupler U3 is coupled to the second direct current source VDD via the tenth resistor R10, an output terminal in the control side of the second optocoupler U3 is coupled to a collector of the third transistor Q3, an emitter of the third transistor Q3 is grounded, a base of the third transistor Q3 is electrically coupled to the main board to receive the power-on signal and shutdown signal output by the main board.

In the present embodiment, the two LED bars are taken as an example for description, the constant-current switch M includes a first constant-current switch M1 and a second constant-current switch M2; an input terminal of the first constant-current switch M1 is coupled to an output terminal of one of the LED light bars, an output of the first constant-current switch M1 is coupled to an input terminal of the constant-current reference source circuit 32, an input terminal of the second constant-current switch M2 is coupled to an output terminal of another LED light bar, an output terminal of the constant-current switch M2 is coupled to an input terminal of the constant-current reference source circuit 32, an controlled terminal of the first constant-current switch M1 and an controlled terminal of the second constant-current switch M2 are electrically coupled to the main board to receive the PWM brightness signal output by the main board.

The starting circuit 31 includes an eleventh resistor R11, a twelfth resistor R12, a thirteenth resistor R13, a fourth triode Q4, a fifth triode Q5;
a first terminal of the eleventh resistor R11 is coupled to 12V direct current power supply, a second terminal of the eleventh resistor R11 is coupled to an emitter of the fourth triode Q4, a collector of the fourth triode Q4 is coupled to the controlled terminal of the constant-current reference source circuit 32, a base of the fourth triode Q4 is coupled to a collector of the fifth triode Q5 via the twelfth resistor R12, an emitter of the fifth triode Q5 is grounded, a base of the fifth triode Q5 is coupled to the main board via the thirteenth resistor R13, to receive the enable signal EN of the main board.

The constant-current reference source circuit 32 includes a fourteenth resistor R14, a second voltage reference chip WZ2, a sixth triode Q6; an input terminal of the second voltage reference chip is coupled to a collector of the fourth triode Q4, an output terminal of the second voltage reference chip is grounded; a reference terminal of the second voltage reference chip WZ2 is coupled to controlled terminals of the mirror constant-current circuits, and the reference terminal of the second voltage reference chip WZ2 also coupled to a base of the sixth triode Q6, the base of the sixth triode Q6 also coupled to the collector of the fourth triode Q4, a collector of the sixth triode Q6 is coupled to output terminals of the first constant-current switch M1, an emitter of the sixth triode Q6 is grounded via the fourteenth transistor.

The mirror constant-current circuit 33 includes fifteenth resistor R15, a seventh triode Q7; a collector of the seventh triode Q7 is coupled to an output terminal of second constant-current switch M2, an emitter of the seventh triode Q7 is grounded via the fifteenth resistor R15.

The second single stage PFC circuit 6 includes a sixteenth resistor R16, a seventeenth resistor R17, an eighteenth resistor R18, a nineteenth resistor R19, a twentieth resistor R20, a third capacitor C3, and a second diode D2, a third diode D3, an eighth transistor Q8, a first stabilivolt Z1, a fourth capacitor C4, and a second control chip U4; the second transformer T2 includes a primary winding, a secondary winding, and the auxiliary winding, in which the auxiliary winding is disposed at the primary of the transformer; the second control chip U4 includes an over-voltage protection terminal HVSU, a power terminal VCC, a driver terminal GATE, a ground terminal GND, an over-current detection terminal CS, a zero-cross detection terminal ZCD, and a control terminal CTRL.

A first terminal of the sixteenth resistor R16 is coupled to a cathode of the second diode D2, an anode of the second diode D2 is coupled to a first terminal of the auxiliary winding of the second transformer T2, a second terminal of the auxiliary winding is grounded, a second terminal of the sixteen resistor R16 is coupled to a collector of the eighth transistor Q8, an emitter of the eighth transistor Q8 is coupled to an anode of the third diode D3, a cathode of the third diode D3 is coupled to a power terminal of the second control chip U4, a first terminal of the fourth capacitor C4 is coupled to a cathode of the third diode D3, a second terminal of the fourth capacitor C4 is grounded, a base of the eighth transistor Q8 is coupled to a cathode of the second diode D2 via the seventh resistor R17; a first terminal of the third capacitor C3 is coupled to a cathode of the second diode D2, a second terminal of the third capacitor C3 is grounded; an anode of the first stabilivolt Z1 is coupled to a base of the eighth transistor Q8, a cathode of the first stabilivolt Z1 is grounded, a first terminal of the eighteenth resistor R18 is coupled to a base of the eighth transistor Q8, a second terminal of the eighteenth resistor R18 is grounded; an over-voltage protection terminal of the second control chip U4 is coupled to a second terminal of the first resistor R1, a ground terminal of the second control chip U4 is grounded; a first terminal of the ninth resistor R19 is coupled to an anode of the second diode D2, a second terminal of the nineteenth resistor R19 is grounded via the twentieth resistor R20; a zero-cross detection terminal of the second control chip U4 is coupled to a second terminal of the nineteenth resistor R19.

The constant-current switch circuit 1 includes a second eleventh resistor R21 and a second MOS transistor K2; a first terminal of the second winding of the second transformer T2 is coupled to an output terminal of the front stage rectifier and filter circuit, a drain of the second MOS transistor K2 is coupled to a second terminal of the primary winding of the second transformer T2, a source of the second MOS transistor is grounded via the second eleventh resistor R21, a gate of the second MOS transistor K2 is coupled to the driver terminal of the second control chip U4, an over-current detection terminal of the second control chip U4 is coupled to a source of the second MOS transistor K2.

The second rectifier and filter circuit 8 includes a fourth diode D4 and a fifth capacitor C5, an anode of the fourth diode D4 is coupled to a first terminal of the secondary winding of the second transformer T2, a second terminal of the secondary winding is grounded, a cathode of the fourth diode D4 is coupled to an input terminal of the DC-DC conversion circuit 9, and is output to the main board after voltage conversion.

The over-voltage regulation circuit includes a first over-voltage regulation circuit (not shown) and a second over-voltage regulation circuit (not shown), the first over-voltage regulation circuit includes a twenty-second resistor R22, a twenty-third resistor R23, a fifth diode D5 and a sixth capacitor C6; the second over-voltage regulation circuit includes a twenty-fourth resistor R24, a twenty-fifth resistor R25, a sixth diode D6 and a seventh capacitor C7; in which a cathode of the fifth diode D5 is coupled to the voltage reference terminal of the first voltage reference chip WZ1, an anode of the fifth diode D5 is coupled to a first terminal of the twenty-fourth resistor R24 via the twenty-third resistor R23, a second terminal of the fourteenth resistor is coupled to an output terminal of the first constant-current switch M1, a first terminal of the sixth capacitor C6 is coupled to a first terminal of the twenty-second resistor R22, and a second terminal of the sixth capacitor C6 is grounded.

An cathode of the sixth diode D6 is coupled to the voltage reference terminal of the first voltage reference chip WZ1, and anode of the sixth diode D6 is coupled to the first terminal of the second sixteenth resistor via the twenty-fifth resistor R25, a second terminal of the twenty-sixth resistor is coupled to an output terminal of the first constant-current switch M1, a first terminal of the seventh capacitor C7 is coupled to a first terminal of the twenty-fourth resistor R24, a second terminal of the seventh capacitor C7 is grounded.

Continuing referring to FIG. 2, the power supply is supplied to the first transformer T1 and the second transformer T2 respectively after processed by the EMI filter circuit 10 and the front stage rectifier and filter circuit 11, large electrolytic capacitor filtering is no need, the transformer is further controlled by the first MOS transistor K1 and the second MOS transistor K2 under the control of the respective control chip, so that the first transformer T1 supplies power to the LED light bars after processed by the first secondary rectifier and filter circuit 7; the second transformer T2 supplies power to the main board after processed by the second secondary rectifier and filter circuit 8. The above single stage PFC controls the constant-current switch circuit 1 and the constant-voltage switch circuit 5, and further controls the first converter and the second transformer T2 respectively, so that the design does not require a high voltage electrolytic capacitor, therefore saving the area and costs of the PCB. As the constant-current output by the first transformer T1 and the constant-voltage output by the second transformer T2 are controlled respectively, the constant-voltage output and the constant-current output do not interfere with each other during the dynamic load, and the constant-voltage is not affected by the crossover of the electrical deviation of the LED light, therefore improving the stability of the system.

When the power-on signal is at a high level, the third transistor Q3 is turned on, the second transistor Q2 is turned on by the second optocoupler U3, the first direct current source VCC1 is output to a power terminal of the first control chip U1 through the eighth resistor R8 to supplies power to the first control chip U1, meantime the first transistor Q1 is turned on, the voltage is sampled by the sixth resistor R6 and the seventh resistor R7, and then coupled to the control terminal of the first control chip U1, so that the control chip U1 starts to operate. In addition, when the enable signal EN is at a high level, the constant-current reference source circuit 32 starts to operate, the sixth triode Q6 is turned on, and a current flows through the LED light bar and in an illuminated state. The brightness of the LED light bar is adjusted by the PWM bright spot signal output by the main board, specifically by controlling the turn-on time of the first constant-current switch M1 to adjust the brightness of the LED light bar, when the duty ratio of the PWM brightness signal is large, the LED light bar is brighter, when the duty ratio of the PWM brightness signal is small, the LED light bar is dark.

When the enable signal EN is at a low level, the constant-current reference source circuit 32 is not operate, the sixth triode Q6 is turned off, no current flows through the LED light bar and in a extinguished state.

When the output signal of the main board is at a low level, the third transistor Q3 is turned off, the second transistor Q2 is turned off by the second optocoupler U3, the power supply of the second control chip U4 is turned off, meantime the first transistor Q1 is turned off, the control terminal of the first control chip U1 stops operating after the seventh resistor is pulled low, at this time, the output of the constant-current of the switching power supply stops operating, so that the standby power consumption is low.

Further, the constant-current control circuit 3 is controlled by a series constant-current reference source, constant-current reference source circuit 32 is include by the second voltage reference chip WZ2, the sixth triode Q6 and the fourteenth resistor R14, the second voltage reference chip WZ2 supplies a reference voltage to the constant-current, and the sixth triode Q6 is controlled, so that the voltage across the fourteenth resistor R14 is constant, further the current flowing through the LED light bar is constant. When the output voltage ripple of the first transformer T1 is large, since the sixth triode Q6 operates in the amplification region, the second voltage reference chip WZ2 controls the sixth triode Q6 to automatically regulate the voltage division of the collector and the emitter, which makes the current more precise and reduces the current ripple. When the voltage of the LED light bar is too small, due to the constant output voltage of the first transformer T1 is constant, the voltage of the collector of the sixth triode Q6 increases, and passes through the second over-voltage regulation circuit included by the twenty-fourth resistor R24, the seventh capacitor C7, the twenty-fifth resistor R25 and the sixth diode D6, the current flowing through the first optocoupler U2 is controlled through the first voltage reference chip WZ1, therefore controlling the operating frequency of the first control chip U1, further the output voltage of the first transformer T1 is lowered, so that the voltage between the collector and the emitter of the sixth triode Q6 is lowered.

Another mirror constant-current circuit 33 includes a seventh triode Q7 and a fifteenth resistor R15, the mirror constant-current circuit 33 uses the constant-current reference source circuit 32 as a current mirror body with, so that the currents of the constant-current circuit and the current mirror body are the same, the subsequent stage may copy any of the same constant current sources, so that the constant current output may match LED light bars with any number of channels.

Further, after the switching power supply is powered on, the rectified and filtered voltage passes through the first resistor R1 to pre-activate the over-voltage protection terminals of the first control chip U1 and the second control chip U4, so as to the voltage of the respective power terminals may reach the turn-on voltage, the first control chip U1 and the second control chip U4 start to oscillate. After stabilization, the auxiliary winding of the secondary transformer T2 outputs voltage, which passes through the eighth transistor Q8, the third diode D3, the sixteenth resistor R16, the seventeenth resistor R17, the first stabilivolt Z1, and the eighteenth resistor R18, and constitutes a linear regulator circuit of the power supply of the second control chip U4, to provide a stable operating voltage for the second control chip U4.

At the same time, the over-voltage protection terminal of the first control chip U1 and the second control chip U4 detects the full-wave voltage signal of the rectified and filtered voltage as a reference signal, and respectively detects the current of the primary winding via sampling the current that through the current sampling resistor, that is, the fourth resistor R4 and the second eleventh resistor R21, to compare with the reference signal, so as to control the operating frequency and duty ratio of the first MOS transistor K1 and the second MOS transistor K2, when the full-wave voltage is large, the operating frequency is high, and the duty ratio is small; when the full-wave voltage is small, the operating frequency is low, and the duty ratio is high, therefore the full-wave voltage signal and the current flowing through the primary winding of the corresponding transformer are in phase, and finally improves the power factor, and the AC-DC conversion is also realized.

Further, as described above, the constant-current source for supplying power to the LED light bars and the constant-voltage source for supplying power to the main board are separately controlled, therefore reducing the rise of working temperature of the first transformer T1, the second transformer T2, the first MOS transistor K1, and the second MOS transistor K2, and also improves the stability of the independent control of the system. Further, when the voltage of the LED light bar is smaller than the voltage output by the secondary winding of the first transformer T1, the constant-current control circuit 3 further controls the first MOS transistor K1 by smaller the operating frequency and duty ratio of the first control chip U1, so the voltage output by the first transformer T1 become smaller, so that the voltage output by the first transformer T1 and the operating voltage of the LED light bar is matched, which in turn reduces the temperature rise of the constant-current control circuit 3. The problem of large difference in output voltage caused by large voltage deviation of the same screen LED light in mass production is solved. The fifth resistor R5 serves as a current limiting resistor of the first optocoupler U2, the fourth resistor R4 samples the current in the primary winding and is coupled to the over-current detection terminal of the first control chip U1, when the output power is too large, the voltage sampled at the fourth resistor R4 is greater than the inner reference of the over-current detection terminal of the first control chip U1, to start the overload protected of the first control chip U1. The Sampling resistor of the second resistors R2 and the third resistor R3 sample the voltage of the auxiliary winding of the transformer, to limit the voltage of the auxiliary winding in the safe range, so the voltage output from the first transformer T1 is prevented from being excessively large.

Further, the second MOS transistor K2 further controls the second transformer T2 under the control of the second single-stage PFC circuit 6, rectified by the fourth diode D4, and after filtered by the fourth capacitor, outputs a stable constant voltage source. The constant voltage feedback loop is the primary side feedback, that is, the sampling resistor of the nineteenth resistor R19 and the twentieth resistor R20 sample the voltage of the auxiliary winding of the second transformer T2, so that the voltage of the auxiliary winding is constant, and the output voltage is constant, when the ripple requirement is high, the DC-DC conversion circuit may be added at the output to make the output voltage ripple smaller.

It should be noted that the mirror constant-current circuit 33 may be arbitrarily expanded according to the number of channels of the LED light bar, so that the solution achieves the requirement of matching any number of LED light bar channel, and realizes the design of the large-size TV power supply to be low cost and high power factor.

There is also provided a television that includes LED light bars, a main board and the switching power supply as described above, the switching power supply having particular arrangements described in the above embodiments, because the television employs all of the features of the above embodiments, all of the advantages of the above embodiments are present here and are not to be repeated herein.

The switching power supply is respectively electronically coupled with the LED light bar and the main board, to provide a constant-current source and a constant-voltage source respectively. The main board also electrically coupled to the LED light bars to control the brightness of the LED light bars.

The foregoing description merely depicts some exemplary embodiments of the present disclosure and therefore is not intended as limiting the scope of the disclosure. Any equivalent structural transformations made to the disclosure, or any direct or indirect applications of the disclosure on any other related fields based on the concepts of the present disclosure, shall all fall in the scope of the disclosure as defined by the appended claims.

## Claims

1. A switching power supply, comprising:
a constant-current switch circuit (1), a first single stage PFC circuit (2), a first transformer (T1), and a constant-current feedback circuit (4);
a constant-voltage switch circuit (5), a second single stage PFC circuit (6) and
a second transformer (T2);
the second transformer (T2) comprises a primary winding, a secondary winding,
and an auxiliary winding disposed at a primary side of the second transformer (T2);
an input terminal of the constant-voltage switch circuit (5) is adapted to receive a direct current, an output terminal of the constant-voltage switch circuit (5) is coupled to the primary winding of the second transformer (T2), the auxiliary winding of the second transformer (T2) is coupled to a zero current detection terminal of the second single stage PFC circuit (6), and the secondary winding of the second transformer (T2) is electrically couplable to a main board;
**characterized in that**,
the constant-current feedback circuit (4) is adapted to sample a current output by the first transformer (T1), and feed back the sampled current to the first single stage PFC circuit (2);
according to the sampled current, the first single stage PFC circuit (2) is adapted to output a first switch signal, drive the constant-current switch circuit (1) to be turned on or off, and control a load current of LED light bars to be constant, wherein an output terminal of the first transformer (T1) is connectable to an input terminal of the LED light bars;
the second single stage PFC circuit (6) is adapted to output a second switch signal to control the constant-voltage switch circuit (5) to be turned on or off at a zero crossing point of the current in the auxiliary winding of the second transformer (T2) detected at the zero current detection terminal of the second single stage PFC circuit; and
the second single stage PFC circuit (6) is further adapted to sample a voltage output by the second transformer (T2) to obtain a sampled voltage, and regulate a duty ratio of the second switch signal according to the sampled voltage, to regulate the output voltage to the main board to be constant;
the switching power supply further comprises a first secondary rectifier and filter circuit (7) and a second secondary rectifier and filter circuit (8); the first secondary rectifier and filter circuit (7) is configured to rectify and filter a pulsating direct current output by the first transformer (T1); the second secondary rectifier and filter circuit (8) is configured to rectify and filter a pulsating direct current output by the second transformer (T2).

2. The switching power supply according to claim 1, **characterized in that**, the switching power supply further comprises a constant-current switch (M) and a constant-current control circuit (3),
the constant-current switch (M) is adapted to adjust brightness of the LED light bars according to a PWM brightness signal output by the main board; and
the constant-current control circuit (3) is adapted to control the LED light bars to be illuminated or extinguished according to an enable signal output by the main board.

3. The switching power supply according to claim 2, **characterized in that**, the first transformer (T1) comprises a primary winding, a secondary winding, and an auxiliary winding disposed at a primary side of the first transformer (T1); an input terminal of the constant-current control circuit is (3) adapted to receive a direct current, an output terminal of the constant-current switch circuit (1) is coupled to the primary winding of the first transformer (T1); the auxiliary winding of the first transformer (T1) is coupled to a zero current detection terminal of the first single stage PFC circuit (2); the secondary winding of the first transformer (T1) is couplable to the input terminals of the LED light bars, output terminals of the LED light bars are couplable to an input terminal of the constant-current switch (M); a controlled terminal of the constant-current switch (M) is couplable to the main board, an output terminal of the constant-current switch (M) is coupled to an input terminal of the constant-current control circuit (3); an output terminal of the constant-current control circuit (3) is coupled to the input terminal of the constant feedback circuit, the controlled terminal of the constant-current control circuit (3) receives the enable signal inputted by the main board; the output terminal of the constant-current feedback circuit (4) is coupled to the feedback terminal of the first single stage PFC circuit (2).

4. The switching power supply according to claim 3, **characterized in that**, the switching power supply further comprises a DC-DC conversion circuit (9), an input terminal of the DC-DC conversion circuit (9) is coupled to the secondary winding of the second transformer (T2), an output terminal of the DC-DC conversion circuit (9) is electrically couplable to the main board.

5. The switching power supply according to claim 4, **characterized in that**, the constant-current control circuit (3) comprises a starting circuit (31), a constant-current reference source circuit (32), and a plurality of mirror constant-current circuits (33); an output terminal of the starting circuit (31) is couplable to the main board to receive the enable signal; an output terminal of the starting circuit (31) is coupled to a controlled terminal of the constant-current reference source circuit (32), an input terminal of the constant-current reference source circuit is couplable to an output terminal of one of the LED light bars; all controlled terminals of the mirror constant-current circuits (33) are coupled to an output terminal of the constant-current reference source circuit (32), input terminals of the mirror constant-current circuits are couplable to output terminals of the other LED light bars respectively.

6. The switching power supply according to claim 5, **characterized in that**, the starting circuit (31) comprises an eleventh resistor (R11), a twelfth resistor (R12), a thirteenth resistor (R13), a fourth triode (Q4), a fifth triode (Q5);
a first terminal of the eleventh resistor (R11) is couplable to a direct current power supply, a second terminal of the eleventh resistor (R11) is coupled to an emitter of the fourth triode (Q4), a collector of the fourth triode (Q4) is coupled to the controlled terminal of the constant-current reference source circuit (32), a base of the fourth triode (Q4) is coupled to a collector of the fifth triode (Q5) via the twelfth resistor (R12), an emitter of the fifth triode (Q5) is grounded, a base of the fifth triode is couplable to the main board via the thirteenth resistor, to receive the enable signal of the main board.

7. The switching power supply according to claim 6, **characterized in that**, the constant-current reference source circuit (32) comprises a fourteenth resistor (R14), a second voltage reference chip (WZ2), a sixth triode (Q6); an input terminal of the second voltage reference chip (WZ2) is coupled to a collector of the fourth triode (Q4), an output terminal of the second voltage reference chip (WZ2) is grounded; a reference terminal of the second voltage reference chip (WZ2) is coupled to controlled terminals of the mirror constant-current circuits (33), and the reference terminal of the second voltage reference chip (WZ2) also are coupled to a base of the sixth triode (Q6), the base of the sixth triode (Q6) also are coupled to the collector of the fourth triode, a collector of the sixth triode is couplable to input terminals of the LED light bars, an emitter of the sixth triode (Q6) is grounded via the fourteenth transistor;
the mirror constant-current circuit (33) comprises a fifteenth resistor (R15), a seventh triode (Q7); an emitter of the seventh triode (Q7) is grounded via the fifteenth resistor (R15).

8. The switching power supply according to claim 7, **characterized in that**, the switching power supply further comprises over-voltage regulation circuits (CS), wherein the number of the over-voltage regulation circuits is equal to the number of the LED light bars, the constant-current switch (M) is one of constant-current switches (M); an input terminal of each of the over-voltage regulation circuits (CS) is coupled to an output terminal of each of the constant-current switches (M), output terminals of all of the over-voltage regulation circuits (CS) are coupled to a regulation terminal of the constant-current feedback circuit (4).

9. A television, comprising LED light bars and a main board, the television further comprises a switching power supply according to claim 1; the switching power supply being electrically couplable to the LED light bars and the main board respectively, the main board being electrically couplable to the LED light bars.

10. The television according to claim 9, **characterized in that**, the switching power supply further comprises a constant-current switch (M) and a constant-current control circuit (3),
the constant-current switch (M) is adapted to adjust brightness of the LED light bars according to a PWM brightness signal output by the main board; and
the constant-current control circuit (3) is adapted to control the LED light bars to be illuminated or extinguished according to an enable signal output by the main board.

11. The television according to claim 10, **characterized in that**, the first transformer (T1) comprises a primary winding, a secondary winding, and an auxiliary winding disposed at a primary side of the first transformer (T1); an input terminal of the constant-current control circuit is (3) adapted to receive a direct current, an output terminal of the constant-current switch circuit (1) is coupled to the primary winding of the first transformer (T1); the auxiliary winding of the first transformer (T1) is coupled to a zero current detection terminal of the first single stage PFC circuit (2); the secondary winding of the first transformer (T1) is couplable to the input terminals of the LED light bars, output terminals of the LED light bars are couplable to an input terminal of the constant-current switch (M); a controlled terminal of the constant-current switch (M) is couplable to the main board, an output terminal of the constant-current switch (M) is coupled to an input terminal of the constant-current control circuit (3); an output terminal of the constant-current control circuit (3) is coupled to the input terminal of the constant feedback circuit, the controlled terminal of the constant-current control circuit (3) receives the enable signal inputted by the main board; the output terminal of the constant-current feedback circuit (4) is coupled to the feedback terminal of the first single stage PFC circuit (2).

## Patentansprüche

1. Schaltnetzteil, umfassend:
einen Konstantstrom-Schaltkreis (1), eine erste einstufige PFC-Schaltung (2), einen ersten Transformator (T1) und eine Konstantstrom-Rückführungsschaltung (4);
einen Konstantspannungs-Schaltkreis (5), eine zweite einstufige PFC-Schaltung (6) und einen zweiten Transformator (T2);
wobei der zweite Transformator (T2) eine Primärwicklung, eine Sekundärwicklung und eine Hilfswicklung umfasst, die an einer Primärseite des zweiten Transformators (T2) angeordnet sind;
eine Eingangsklemme des Konstantspannungs-Schaltkreises (5) so ausgelegt ist, dass sie einen Gleichstrom empfängt, wobei eine Ausgangsklemme des Konstantspannungs-Schaltkreises (5) mit der Primärwicklung des zweiten Transformators (T2) gekoppelt ist, die Hilfswicklung des zweiten Transformators (T2) mit einer Nullstrom-Erfassungsklemme des zweiten einstufigen PFC-Schaltkreises (6) gekoppelt ist, und die Sekundärwicklung des zweiten Transformators (T2) elektrisch mit einer Hauptplatine koppelbar ist;
**dadurch gekennzeichnet, dass** die Konstantstrom-Rückführungsschaltung (4) so ausgelegt ist, dass sie einen von dem ersten Transformator (T1) ausgegebenen Strom abtastet und den abgetasteten Strom an die erste einstufige PFC-Schaltung (2) zurückführt;
wobei der erste einstufige PFC-Schaltkreis (2) so ausgelegt ist, dass er entsprechend dem abgetasteten Strom ein erstes Schaltsignal ausgibt, den Konstantstrom-Schaltkreis (1) so ansteuert, dass er ein- oder ausgeschaltet wird, und einen Laststrom von LED-Lichtleisten so steuert, dass er konstant ist, wobei eine Ausgangsklemme des ersten Transformators (T1) mit einer Eingangsklemme der LED-Lichtleisten verbunden werden kann;
wobei der zweite einstufige PFC-Schaltkreis (6) so ausgelegt ist, dass er ein zweites Schaltsignal ausgibt, um den Konstantspannungs-Schaltkreis (5) so zu steuern, dass er bei einem Nulldurchgangspunkt des Stroms in der Hilfswicklung des zweiten Transformators (T2), der an der Nulldurchgangsstrom-Erfassungsklemme des zweiten einstufigen PFC-Schaltkreises erfasst wird, ein- oder ausgeschaltet wird; und
wobei die zweite einstufige PFC-Schaltung (6) ferner dazu ausgelegt ist, eine von dem zweiten Transformator (T2) ausgegebene Spannung abzutasten, um eine abgetastete Spannung zu erhalten, und ein Tastverhältnis des zweiten Schaltsignals entsprechend der abgetasteten Spannung zu regulieren, um die Ausgangsspannung an die Hauptplatine so zu regulieren, dass sie konstant ist;
wobei das Schaltnetzteil ferner eine erste sekundäre Gleichrichter- und Filterschaltung (7) und eine zweite sekundäre Gleichrichter- und Filterschaltung (8) umfasst; wobei die erste sekundäre Gleichrichter- und Filterschaltung (7) so ausgelegt ist, dass sie einen vom ersten Transformator (T1) ausgegebenen pulsierenden Gleichstrom gleichrichtet und filtert, und die zweite sekundäre Gleichrichter- und Filterschaltung (8) so ausgelegt ist, dass sie einen vom zweiten Transformator (T2) ausgegebenen pulsierenden Gleichstrom gleichrichtet und filtert.

2. Schaltnetzteil nach Anspruch 1, **dadurch gekennzeichnet, dass** das Schaltnetzteil ferner einen Konstantstromschalter (M) und eine Konstantstrom-Steuerschaltung (3) umfasst,
wobei der Konstantstromschalter (M) so ausgelegt ist, dass er die Helligkeit der LED-Lichtleisten entsprechend einem von der Hauptplatine ausgegebenen PWM-Helligkeitssignal einstellt; und
die Konstantstrom-Steuerschaltung (3) so ausgelegt ist, dass sie die LED-Lichtleisten so steuert, dass sie entsprechend einem von der Hauptplatine ausgegebenen Freigabesignal aufleuchten oder erlöschen.

3. Schaltnetzteil nach Anspruch 2, **dadurch gekennzeichnet, dass** der erste Transformator (T1) eine Primärwicklung, eine Sekundärwicklung und eine Hilfswicklung umfasst, die an einer Primärseite des ersten Transformators (T1) angeordnet sind; eine Eingangsklemme der Konstantstrom-Steuerschaltung (3) so ausgelegt ist, dass sie einen Gleichstrom empfängt, eine Ausgangsklemme der Konstantstrom-Schaltschaltung (1) mit der Primärwicklung des ersten Transformators (T1) gekoppelt ist; die Hilfswicklung des ersten Transformators (T1) mit einer Nullstrom-Erfassungsklemme der ersten einstufigen PFC-Schaltung (2) gekoppelt ist; die Sekundärwicklung des ersten Transformators (T1) mit den Eingangsklemmen der LED-Lichtleisten koppelbar ist, Ausgangsklemmen der LED-Lichtleisten mit einer Eingangsklemme des Konstantstromschalters (M) koppelbar sind; eine gesteuerte Klemme des Konstantstromschalters (M) mit der Hauptplatine koppelbar ist, eine Ausgangsklemme des Konstantstromschalters (M) mit einer Eingangsklemme der Konstantstrom-Steuerschaltung (3) gekoppelt ist; eine Ausgangsklemme der Konstantstrom-Steuerschaltung (3) mit der Eingangsklemme der Konstantrückführungsschaltung gekoppelt ist, die gesteuerte Klemme der Konstantstrom-Steuerschaltung (3) das von der Hauptplatine eingegebene Freigabesignal empfängt; die Ausgangsklemme der Konstantstrom-Rückführungsschaltung (4) mit der Rückführungsklemme der ersten einstufigen PFC-Schaltung (2) gekoppelt ist.

4. Schaltnetzteil nach Anspruch 3, **dadurch gekennzeichnet, dass** das Schaltnetzteil ferner eine DC-DC-Wandlerschaltung (9) umfasst, wobei eine Eingangsklemme der DC-DC-Wandlerschaltung (9) mit der Sekundärwicklung des zweiten Transformators (T2) gekoppelt ist und eine Ausgangsklemme der DC-DC-Wandlerschaltung (9) elektrisch mit der Hauptplatine koppelbar ist.

5. Schaltnetzteil nach Anspruch 4, **dadurch gekennzeichnet, dass** die Konstantstrom-Steuerschaltung (3) eine Startschaltung (31), eine Konstantstrom-Referenzquellenschaltung (32) und mehrere Spiegelkonstantstrom-Schaltungen (33) umfasst, wobei eine Ausgangsklemme der Startschaltung (31) mit der Hauptplatine gekoppelt werden kann, um das Freigabesignal zu empfangen; eine Ausgangsklemme der Startschaltung (31) mit einer gesteuerten Klemme der Konstantstrom-Referenzquellenschaltung (32) gekoppelt ist, eine Eingangsklemme der Konstantstrom-Referenzquellenschaltung mit einer Ausgangsklemme einer der LED-Lichtleisten koppelbar ist; alle gesteuerten Klemmen der Spiegelkonstantstrom-Schaltungen (33) mit einer Ausgangsklemme der Konstantstrom-Referenzquellenschaltung (32) gekoppelt sind, Eingangsklemmen der Spiegelkonstantstrom-Schaltungen jeweils mit Ausgangsklemmen der anderen LED-Lichtleisten koppelbar sind.

6. Schaltnetzteil nach Anspruch 5, **dadurch gekennzeichnet, dass** die Startschaltung (31) einen elften Widerstand (R11), einen zwölften Widerstand (R12), einen dreizehnten Widerstand (R13), eine vierte Triode (Q4) und eine fünfte Triode (Q5) umfasst;
wobei eine erste Klemme des elften Widerstands (R11) mit einer Gleichstromversorgung gekoppelt ist, eine zweite Klemme des elften Widerstands (R11) mit einem Emitter der vierten Triode (Q4) koppelbar ist, ein Kollektor der vierten Triode (Q4) mit der gesteuerten Klemme der Konstantstrom-Referenzquellenschaltung (32) gekoppelt ist, eine Basis der vierten Triode (Q4) über den zwölften Widerstand (R12) mit einem Kollektor der fünften Triode (Q5) gekoppelt ist, ein Emitter der fünften Triode (Q5) geerdet ist, eine Basis der fünften Triode über den dreizehnten Widerstand mit der Hauptplatine koppelbar ist, um das Freigabesignal der Hauptplatine zu empfangen.

7. Schaltnetzteil nach Anspruch 6, **dadurch gekennzeichnet, dass** die Konstantstrom-Referenzquellenschaltung (32) einen vierzehnten Widerstand (R14), einen zweiten Spannungsreferenzchip (WZ2), eine sechste Triode (Q6) umfasst; wobei eine Eingangsklemme des zweiten Spannungsreferenzchips (WZ2) mit einem Kollektor der vierten Triode (Q4) gekoppelt ist, eine Ausgangsklemme des zweiten Spannungsreferenzchips (WZ2) geerdet ist; eine Referenzklemme des zweiten Spannungsreferenzchips (WZ2) mit gesteuerten Klemmen der Spiegelkonstantstrom-Schaltungen (33) gekoppelt ist, und der Referenzanschluss des zweiten Spannungsreferenzchips (WZ2) auch mit einer Basis der sechsten Triode (Q6) gekoppelt ist, wobei die Basis der sechsten Triode (Q6) auch mit dem Kollektor der vierten Triode gekoppelt ist, ein Kollektor der sechsten Triode mit Eingangsklemmen der LED-Lichtleisten koppelbar ist, ein Emitter der sechsten Triode (Q6) über den vierzehnten Transistor geerdet ist; die Spiegelkonstantstrom-Schaltung (33) einen fünfzehnten Widerstand (R15) und eine siebte Triode (Q7) umfasst; ein Emitter der siebten Triode (Q7) über den fünfzehnten Widerstand (R15) geerdet ist.

8. Schaltnetzteil nach Anspruch 7, **dadurch gekennzeichnet, dass** das Schaltnetzteil ferner Überspannungsregelungsschaltungen (CS) umfasst, wobei die Anzahl der Überspannungsregelungsschaltungen gleich der Anzahl der LED-Lichtleisten ist, der Konstantstromschalter (M) einer der Konstantstromschalter (M) ist; wobei eine Eingangsklemme jeder der Überspannungsregelungsschaltungen (CS) mit einer Ausgangsklemme jedes der Konstantstromschalter (M) gekoppelt ist, wobei die Ausgangsklemmen aller Überspannungsregelungsschaltungen (CS) mit einer Regelungsklemme der Konstantstrom-Rückführungsschaltung (4) gekoppelt sind.

9. Fernseher, der LED-Lichtleisten und eine Hauptplatine umfasst, wobei der Fernseher ferner ein Schaltnetzteil nach Anspruch 1 umfasst; wobei das Schaltnetzteil mit den LED-Lichtleisten bzw. der Hauptplatine elektrisch koppelbar ist, wobei die Hauptplatine mit den LED-Lichtleisten elektrisch koppelbar ist.

10. Fernseher nach Anspruch 9, **dadurch gekennzeichnet, dass** das Schaltnetzteil ferner einen Konstantstromschalter (M) und eine Konstantstrom-Steuerschaltung (3) umfasst, wobei der Konstantstromschalter (M) so ausgelegt ist, dass er die Helligkeit der LED-Lichtleisten entsprechend einem von der Hauptplatine ausgegebenen PWM-Helligkeitssignal einstellt; und
die Konstantstrom-Steuerschaltung (3) so ausgelegt ist, dass sie die LED-Lichtleisten so steuert, dass sie entsprechend einem von der Hauptplatine ausgegebenen Freigabesignal leuchten oder erlöschen.

11. Fernseher nach Anspruch 10, **dadurch gekennzeichnet, dass** der erste Transformator (T1) eine Primärwicklung, eine Sekundärwicklung und eine Hilfswicklung, die an einer Primärseite des ersten Transformators (T1) angeordnet sind, umfasst; wobei eine Eingangsklemme der Konstantstrom-Steuerschaltung (3) so ausgelegt ist, dass sie einen Gleichstrom empfängt, eine Ausgangsklemme der Konstantstrom-Schaltschaltung (1) mit der Primärwicklung des ersten Transformators (T1) gekoppelt ist; die Hilfswicklung des ersten Transformators (T1) mit einer Nullstrom-Erfassungsklemme der ersten einstufigen PFC-Schaltung (2) gekoppelt ist; die Sekundärwicklung des ersten Transformators (T1) mit den Eingangsklemmen der LED-Lichtleisten koppelbar ist, Ausgangsklemmen der LED-Lichtleisten mit einer Eingangsklemme des Konstantstromschalters (M) koppelbar sind; eine gesteuerte Klemme des Konstantstromschalters (M) mit der Hauptplatine koppelbar ist, eine Ausgangsklemme des Konstantstromschalters (M) mit einer Eingangsklemme der Konstantstrom-Steuerschaltung (3) gekoppelt ist; eine Ausgangsklemme der Konstantstrom-Steuerschaltung (3) mit der Eingangsklemme der Konstantrückführungsschaltung gekoppelt ist, die gesteuerte Klemme der Konstantstrom-Steuerschaltung (3) das von der Hauptplatine eingegebene Freigabesignal empfängt; die Ausgangsklemme der Konstantstrom-Rückführungsschaltung (4) mit der Rückführungsklemme der ersten einstufigen PFC-Schaltung (2) gekoppelt ist.

## Revendications

1. Alimentation de commutation, comprenant :
un circuit de commutation à courant constant (1), un premier circuit PFC à monoétage (2), un premier transformateur (T1) et un circuit de rétroaction à courant constant (4) ;
un circuit de commutation à tension constante (5), un deuxième circuit PFC à monoétage (6) et un deuxième transformateur (T2) ;
le deuxième transformateur (T2) comprend un enroulement primaire, un enroulement secondaire et un enroulement auxiliaire disposé sur un côté primaire du deuxième transformateur (T2) ;
une borne d'entrée du circuit de commutation à tension constante (5) est adaptée pour recevoir un courant continu, une borne de sortie du circuit de commutation à tension constante (5) est couplée à l'enroulement primaire du deuxième transformateur (T2), l'enroulement auxiliaire du deuxième transformateur (T2) est couplé à une borne de détection de courant nul du deuxième circuit PFC à monoétage (6), et l'enroulement secondaire du deuxième transformateur (T2) est électriquement couplable à une carte mère ;
**caractérisée en ce que**,
le circuit de rétroaction à courant constant (4) est adapté pour échantillonner un contant fourni par le premier transformateur (T1) et renvoyer le courant échantillonné au premier circuit PFC à monoétage (2) ;
en fonction du courant échantillonné, le premier circuit PFC à monoétage (2) est adapté pour émettre un premier signal de commutation, entraîner le circuit de commutation à courant constant (1) à être activé ou désactivé, et commander un courant de charge de barres lumineuses LED à être constant, dans lequel une borne de sortie du premier transformateur (T1) est connectable à une borne d'entrée des barres lumineuses LED ;
le deuxième circuit PFC à monoétage (6) est adapté pour émettre un deuxième signal de commutation afin de commander le circuit de commutation à tension constante (5) à être activé ou désactivé à un point de passage à zéro du courant dans l'enroulement auxiliaire du deuxième transformateur (T2) détecté à la borne de détection de courant nul du deuxième circuit PFC à monoétage ; et
le deuxième circuit PFC à monoétage (6) est adapté en outre pour échantillonner une tension fournie par le deuxième transformateur (T2) afin d'obtenir une tension échantillonnée et pour réguler un rapport cyclique du deuxième signal de commutation en fonction de la tension échantillonnée, afin de réguler la tension de sortie vers la carte mère à être constante ;
l'alimentation de commutation comprend en outre un premier circuit de redressement et de filtration secondaire (7) et un deuxième circuit de redressement et de filtration secondaire (8) ; le premier circuit de redressement et de filtrage secondaire (7) est configuré pour redresser et filtrer un courant continu pulsé fourni par le premier transformateur (T1) ; et le deuxième circuit de redressement et de filtration secondaire (8) est configuré pour redresser et filtrer un courant continu pulsé fourni par le deuxième transformateur (T2).

2. Alimentation de commutation selon la revendication 1, **caractérisée en ce que** l'alimentation de commutation comprend en outre un commutateur à courant constant (M) et un circuit de commande à courant constant (3),
le commutateur à courant constant (M) est adapté pour régler la luminosité des barres lumineuses LED en fonction d'un signal de luminosité PWM émis par la carte mère ; et
le circuit de commande à courant constant (3) est adapté pour commander les barres lumineuses LED à être éclairées ou à être éteintes en fonction d'un signal d'activation émis par la carte mère.

3. Alimentation de commutation selon la revendication 2, **caractérisée en ce que** le premier transformateur (T1) comprend un enroulement primaire, un enroulement secondaire et un enroulement auxiliaire disposé sur un côté primaire du premier transformateur (T1) ; une borne d'entrée du circuit de commande à courant constant (3) est adaptée pour recevoir un courant continu, une borne de sortie du circuit de commutation à courant constant (1) est couplée à l'enroulement primaire du premier transformateur (T1) ; l'enroulement auxiliaire du premier transformateur (T1) est couplé à une borne de détection de courant nul du premier circuit PFC à monoétage (2) ; l'enroulement secondaire du premier transformateur (T1) est couplable aux bornes d'entrée des barres lumineuses LED, des bornes de sortie des barres lumineuses LED sont couplables à une borne d'entrée du commutateur à courant constant (M) ; une borne commandée du commutateur à courant constant (M) est couplable à la carte mère, une borne de sortie du commutateur à courant constant (M) est couplée à une borne d'entrée du circuit de commande à courant constant (3) ; une borne de sortie du circuit de commande à courant constant (3) est couplée à la borne d'entrée du circuit à rétroaction constante, la borne commandée du circuit de commande à courant constant (3) reçoit le signal d'activation entré par la carte mère ; la borne de sortie du circuit de rétroaction à courant constant (4) est couplée à la borne de rétroaction du premier circuit PFC à monoétage (2).

4. Alimentation de commutation selon la revendication 3, **caractérisée en ce que** l'alimentation de commutation comprend en outre un circuit de conversion CC-CC (9), une borne d'entrée du circuit de conversion CC-CC (9) est couplée à l'enroulement secondaire du deuxième transformateur (T2), et une borne de sortie du circuit de conversion CC-CC (9) est électriquement couplable à la carte mère.

5. Alimentation de commutation selon la revendication 4, **caractérisée en ce que** le circuit de commande à courant constant (3) comprend un circuit de démarrage (31), un circuit de source de référence à courant constant (32) et une pluralité de circuits à courant constant de miroir (33) ; une borne de sortie du circuit de démarrage (31) est couplable à la carte mère pour recevoir le signal d'activation ; une borne de sortie du circuit de démarrage (31) est couplée à une borne commandée du circuit de source de référence à courant constant (32), une borne d'entrée du circuit de source de référence à courant constant est couplable à une borne de sortie de l'une des barres lumineuses LED ; toutes les bornes commandées des circuits à courant constant de miroir (33) sont couplées à une borne de sortie du circuit de source de référence à courant constant (32), et des bornes d'entrée des circuits à courant constant de miroir sont couplables à bornes de sortie des autres barres lumineuses LED respectivement.

6. Alimentation de commutation selon la revendication 5, **caractérisée en ce que** le circuit de démarrage (31) comprend une onzième résistance (R11), une douzième résistance (R12), une treizième résistance (R13), une quatrième triode (Q4) et une cinquième triode (Q5) ;
une première borne de la onzième résistance (R11) est couplée à une alimentation en courant continu, une deuxième borne de la onzième résistance (R11) est couplable à un émetteur de la quatrième triode (Q4), un collecteur de la quatrième triode (Q4) est couplé à la borne commandée du circuit de source de référence à courant constant (32), une base de la quatrième triode (Q4) est couplée à un collecteur de la cinquième triode (Q5) par l'intermédiaire de la douzième résistance (R12), un émetteur de la cinquième triode (Q5) est mis à la terre, et une base de la cinquième triode est couplable à la carte mère par l'intermédiaire de la treizième résistance pour recevoir le signal d'activation de la carte mère.

7. Alimentation de commutation selon la revendication 6, **caractérisée en ce que** le circuit de source de référence à courant constant (32) comprend une quatorzième résistance (R14), une deuxième puce de référence de tension (WZ2) et une sixième triode (Q6) ; une borne d'entrée de la deuxième puce de référence de tension (WZ2) est couplée à un collecteur de la quatrième triode (Q4), une borne de sortie de la deuxième puce de référence de tension (WZ2) est mise à la terre ; une borne de référence de la deuxième puce de référence de tension (WZ2) est couplée à bornes commandées des circuits à courant constant de miroir (33), et la borne de référence de la deuxième puce de référence de tension (WZ2) également couplée à une base de la sixième triode (Q6), la base de la sixième triode (Q6) également couplée au collecteur de la quatrième triode, un collecteur de la sixième triode est couplé à bornes d'entrée des barres lumineuses LED, et un émetteur de la sixième triode (Q6) est mis à la terre par l'intermédiaire du quatorzième transistor ;
le circuit à courant constant de miroir (33) comprend une quinzième résistance (R15) et une septième triode (Q7) ; un émetteur de la septième triode (Q7) est mis à la terre par l'intermédiaire de la quinzième résistance (R15).

8. Alimentation de commutation selon la revendication 7, **caractérisée en ce que** l'alimentation de commutation comprend en outre des circuits de régulation de surtension (CS), dans laquelle le nombre de circuits de régulation de surtension est égal au nombre de barres lumineuses LED, le commutateur à courant constant (M) est l'un des commutateurs à courant constant (M) ; une borne d'entrée de chacun des circuits de régulation de surtension (CS) est couplée à une borne de sortie de chacun des commutateurs à courant constant (M), des bornes de sortie de tous les circuits de régulation de surtension (CS) sont couplées à une borne de régulation du circuit de rétroaction à courant constant (4).

9. Téléviseur, comprenant des barres lumineuses LED et une carte mère, le téléviseur comprend en outre une alimentation de commutation selon la revendication 1 ; l'alimentation de commutation étant électriquement couplable aux barres lumineuses LED et à la carte mère respectivement, et la carte mère étant électriquement couplable aux barres lumineuses LED.

10. Téléviseur selon la revendication 9, **caractérisé en ce que** l'alimentation de commutation comprend en outre un commutateur à courant constant (M) et un circuit de commande à courant constant (3),
le commutateur à courant constant (M) est adapté pour régler la luminosité des barres lumineuses LED en fonction d'un signal de luminosité PWM émis par la carte mère ; et
le circuit de commande à courant constant (3) est adapté pour commander les barres lumineuses LED à être éclairées ou à être éteintes en fonction d'un signal d'activation émis par la carte mère.

11. Téléviseur selon la revendication 10, **caractérisé en ce que** le premier transformateur (T1) comprend un enroulement primaire, un enroulement secondaire et un enroulement auxiliaire disposé sur un côté primaire du premier transformateur (T1) ; une borne d'entrée du circuit de commande à courant constant (3) est adaptée pour recevoir un courant continu, une borne de sortie du circuit de commutation à courant constant (1) est couplée à l'enroulement primaire du premier transformateur (T1) ; l'enroulement auxiliaire du premier transformateur (T1) est couplé à une borne de détection de courant nul du premier circuit PFC à monoétage (2) ; l'enroulement secondaire du premier transformateur (T1) est couplable aux bornes d'entrée des barres lumineuses LED, des bornes de sortie des barres lumineuses LED sont couplables à une borne d'entrée du commutateur à courant constant (M) ; une borne commandée du commutateur à courant constant (M) est couplable à la carte mère, une borne de sortie du commutateur à courant constant (M) est couplée à une borne d'entrée du circuit de commande à courant constant (3) ;
une borne de sortie du circuit de commande à courant constant (3) est couplée à la borne d'entrée du circuit à rétroaction constante, la borne commandée du circuit de commande à courant constant (3) reçoit le signal d'activation entré par la carte mère ; la borne de sortie du circuit de rétroaction à courant constant (4) est couplée à la borne de rétroaction du premier circuit PFC à monoétage (2).
